# EUROPEAN PATENT APPLICATION

(11) **EP 4 850 845 A1**
(43) Date of publication of application: **09.12.2026**
(21) Application number: 25748087.1
(22) Date of filing: 23.01.2025
(51) Int. Cl.: B23K 26/073, B23K 26/38

(54) **LASER IRRADIATION DEVICE, LASER PROCESSING APPARATUS INCLUDING SAME, AND LASER PROCESSING METHOD**

(30) Priority: 31.01.2024 JP 2024012775
(71) Applicant: H&F Corporation, Awara-shi, Fukui 919-0695 (JP)
(72) Inventor: TAMPA Yusuke, Awara-shi, Fukui 919-0695 (JP); KHARE Vivek Kumar, Awara-shi, Fukui 919-0695 (JP); HOSOKAWA Takumi, Awara-shi, Fukui 919-0695 (JP); OKAZAKI Akira, Awara-shi, Fukui 919-0695 (JP); FUJII Shoichiro, Awara-shi, Fukui 919-0695 (JP); YOSHIDA Masashi, Awara-shi, Fukui 919-0695 (JP); SUZUKI Atsushi, Toyota-shi, Aichi 471-8571 (JP)
(74) Representative: Goddar, Heinz J.
(86) International application number: PCT/JP2025/002092
(87) International publication number: WO 2025/164505

(57) **Abstract**

[Problem] To provide a laser irradiation device capable of inhibiting scattering of spatter while cutting even a plated metal sheet, a laser processing apparatus including the same, and a laser processing method.

[Solution to Problem] The present invention relates to a laser irradiation device 10 for cutting a plated metal sheet, on which a plating film is formed on its surface, with laser light, and which comprises a laser head 2 having a built-in lens for collecting the laser light, and a laser oscillator 3 for introducing the laser light into the said laser head 2, and irradiates the plated metal sheet with round small-diameter laser light 21a and 21b and large-diameter laser light 22a and 22b having diameters larger than the said small-diameter laser light 21a and 21b, as the laser light, and the irradiation with the large-diameter laser light 22a and 22b breaks the plating film, and the irradiation with the small-diameter laser light 21a and 21b cuts the metal sheet, a laser processing apparatus 100 including the same, and a laser processing method.

## Description

### [Technical Field]

The present invention relates to a laser irradiation device for cutting a plated metal sheet with laser light, a laser processing apparatus including the same, and a laser processing method.

### [Background Art]

As one method of cutting a metal sheet, laser processing is a well-known method.

Such laser processing involves irradiating a metal sheet with laser light from a laser head, and cutting the relevant metal sheet using the energy of the irradiated laser.

For example, in the field of press working, laser processing is used when cutting a long metal sheet wound in a coil into a desired shape, or when cutting a metal sheet used as a blank material into a desired shape.

One advantage of laser processing is that, by preliminarily programming control of a planned cutting location along which a laser head travels, a metal sheet can be precisely cut into the desired shape, eliminating the need for cutting dies.

Also, laser processing has another advantage of being less prone to burr formation.

As one of laser processing apparatuses, for example, a laser blanking device is known which is capable of transporting a flat plate material, and at the same time, cutting it into a blank material utilizing laser light irradiated from a laser nozzle (laser head), which is provided with a laser nozzle, endless conveyor for transporting a plate material, a pair of upstream side support rollers and downstream side support rollers installed below the laser nozzle, and pull-in rollers installed below the upstream side support rollers and downstream side support rollers, and the upstream side support rollers, and the downstream side support rollers and the pull-in rollers guide the endless conveyor, and their respective positions can be changed independently (see, for example, Patent Literature 1).

Also, another laser blanking device is known which is provided with: a first endless belt on the front side and a second endless belt on the rear side; first front upper inner guide rollers, first front lower inner guide rollers, first rear upper inner guide rollers, first rear middle inner guide rollers, first rear lower inner guide rollers, a first guide part, second front upper inner guide rollers, second front middle inner guide rollers, second front lower inner guide rollers, second rear upper inner guide rollers, second rear lower inner guide rollers, and a second guide part which are for guiding these; a laser nozzle (laser head) arranged above a space part between the first endless belt and the second endless belt; and whose shift part formed by an integration of the first rear upper inner guide rollers, the first rear middle inner guide rollers, the second front upper inner guide rollers, and the second front middle inner guide rollers follows and slides with the movement of laser nozzle in the front-rear direction so as to be positioned directly below the laser nozzle; and whose driven shift part formed by an integration of the first rear lower inner guide rollers and the second front lower inner guide rollers is capable of sliding along a Y-axis driven shift rail extending in the front-rear direction equipped on both sides of the first endless belt and the second endless belt; and also follows the sliding of the shift part and moves in the opposite direction to the movement of the shift part (see, for example, Patent Literature 2).

### [Citation List]

### [Patent Literatures]

[Patent Literature 1] Patent application publication no. 5916170
[Patent Literature 2] Patent application publication no. 6792728

### [Summary of Invention]

### [Technical Problem]

However, in the laser irradiation device equipped with the laser head described in the above Patent Literature 1 and the above Patent Literature 2, when a metal sheet with a plating film formed on its surface for purposes such as rust prevention (hereinafter also referred to as "plated metal sheet") is subjected to laser processing, a situation known as scattering of spatter arises.

Incidentally, when the movement speed of the laser head is increased, the degree of the scattering of spatter increases.

And if the scattered spatter adheres to the plated metal sheet, it compromises the cleanliness of the relevant plated metal sheet, and if it enters into the laser head, it causes a decline in the intensity of the laser light irradiated from the relevant laser head.

Incidentally, if protective glass or the like is installed to prevent intrusion into the laser head, the relevant protective glass will need to be replaced frequently, which will reduce the operating rate.

This invention was made in view of the above problem and the aim is to provide a laser irradiation device capable of inhibiting scattering of spatter while cutting even a plated metal sheet, a laser processing apparatus including the same, and a laser processing method.

### [Solution to Problem]

In order to solve the above problem, the inventors of the present invention diligently studied and discovered that the above problem can be solved by using the irradiation of both large-diameter laser light and small-diameter laser light as laser light, and irradiating the large-diameter laser light breaks the plating film, and irradiating the small-diameter laser light cuts the metal sheet, and thus completed the present invention.

The present invention relates to a laser irradiation device for cutting a plated metal sheet on which a plating film is formed on its surface, with laser light; which is equipped with: a laser head with a built-in lens for collecting the laser light and a laser oscillator for introducing the laser light into the said laser head; and irradiates the plated metal sheet with round small-diameter laser light and large-diameter laser light having diameters larger than the said small-diameter laser light, as the laser light, and the irradiation with the large-diameter laser light breaks the plating film, and the irradiation with the small-diameter laser light cuts the metal sheet.

In the laser irradiation device of the present invention, it is preferable that the large-diameter laser light is ring-shaped and surrounding the small-diameter laser light, and that irradiation with large-diameter laser light breaks plating film, and that irradiation with the small-diameter laser light cuts the metal sheet.

Also, in the laser irradiation device of the present invention, it is preferable that the large-diameter laser light is round in shape containing the small-diameter laser light, and that irradiation with only large-diameter laser light breaks plating film, and that simultaneous irradiation with small-diameter laser light and large-diameter laser light cuts the metal sheet.

In the laser irradiation device of the present invention, it is preferable that the plating film is a zinc plating film or an aluminum plating film and the metal sheet is a steel sheet, and that the thickness of the plated metal sheet is 9.0 mm or less, and that the output of the small-diameter laser light is 0.5 to 15.0 kW while the output of the large-diameter laser light is 0.1 to 10.0 kW.

The present invention relates to a laser processing apparatus for cutting a plated metal sheet on which a plating film is formed on its surface, with laser light; which is equipped with the laser irradiation device mentioned above for irradiating laser light and conveyors for transporting a plated metal sheet, to cut it with the above-mentioned laser light while continuously transporting the plated metal sheet.

Also, in the laser processing apparatus of the present invention, it is preferable that a pair of Y-axis rails are provided on both sides of the conveyors and extend in the transport direction, and an X-axis rail extends across the entire width of the conveyors, and that the laser head is guided by the X-axis rail and is able to make reciprocating movement, and that the X-axis rail is guided by the Y-axis rails and is able to make reciprocating movement.

The present invention relates to a laser processing method using the above laser processing apparatus, wherein, while simultaneously outputting a small-diameter laser light and a large-diameter laser light, makes the laser head travel along a planned cutting location of a plated metal sheet.

At this time, in the laser processing method of the present invention, it is preferable that the relative speed of the laser head with respect to a plated metal sheet is 1.0 to 150 m/min.

### [Advantageous Effects of Invention]

The laser irradiation device of the present invention irradiates a plated metal sheet with a large-diameter laser light and a small-diameter laser light, and in addition to cutting a metal sheet with the small-diameter laser light, the large-diameter laser light breaks the plating film, thereby capable of inhibiting scattering of spatter while cutting the plated metal sheet.

As a result, it is possible to inhibit the scattering of spatter from adhering to the plated metal sheet, entering into the laser head, and so on.

Therefore, with the laser irradiation device of the present invention, it is possible to inhibit the scattering of spatter while cutting even a plated metal sheet.

At this time, for example, when adopting a steel sheet, on which a zinc plating film or an aluminum plating film formed on its surface, and whose thickness falls within the above range, it is possible to effectively inhibit the scattering of spatter while cutting by controlling the output of the small-diameter laser light and the output of the large-diameter laser light within the above range.

Here, the definite reason why the adopting the above laser irradiation device can inhibit the scattering of spatter is not known, however, it is considered that, by breaking the plating film with the irradiation of large-diameter laser light aside from cutting the metal sheet with the irradiation of small-diameter laser light, the simultaneous melting of the metal sheet material and vaporization of the plating film could be prevented, thereby, inhibiting the scattering of the metal sheet material as spatter due to volume expansion caused by the vaporization of the plating film. However, the reason is not limited to this.

In the laser irradiation device of the present invention, when the large-diameter laser light is ring-shaped and surrounding the small-diameter laser light, or when it is round in shape containing the small-diameter laser light, the plating film can be broken by the irradiation with the large-diameter laser light immediately before the metal sheet is cut by the irradiation with the small-diameter laser light, which makes it possible to efficiently cut a plated metal sheet while inhibiting the scattering of spatter.

In the laser processing apparatus of the present invention, for a plated metal sheet, by moving the laser head along the planned cutting location of the plated metal sheet and by irradiating it with laser light, the relevant plated metal sheet can be cut. That is, because laser processing can be performed continuously, production efficiency is high.

At this time, since the laser head in the laser processing apparatus is the same as that of the laser irradiation device mentioned above, it is possible to inhibit the scattering of spatter while cutting a plated metal sheet. As a result, it is possible to inhibit not only the adhesion of scattering of spatter to the plated metal sheet and its entry into the laser head, but also its adhesion to the conveyors.

In the laser processing apparatus of the present invention, since laser processing is performed continuously while a plated metal sheet is transported by conveyors, production efficiency is excellent.

Also, by equipping the laser processing device with Y-axis rails and X-axis rail, the laser head can be smoothly moved in all directions along a plane parallel to the plated metal sheet.

This makes it possible to perform high-precision laser processing even when a planned cutting location has a complex shape or smooth curves.

In the laser processing method of the present invention, by simultaneously outputting a small-diameter laser light and a large-diameter laser light while moving the laser head along a planned cutting location of a plated metal sheet, the plating film is broken first, immediately followed by the cutting of a metal sheet, thereby, efficient cutting of the plated metal sheet while inhibiting the scattering of spatter is possible.

Also, in the above laser processing method, since it is a simple operation of simultaneous outputting of small-diameter laser light and large-diameter laser light and making the laser head travel, complex control is not required, and laser processing can be performed relatively easily.

At this time, by keeping the relative speed of the laser head to the plated metal sheet within the above range, scattering of spatter can be inhibited and productivity can be improved at the same time.

### [Brief Description of Drawings]

[FIG. 1] FIG. 1 is a perspective view showing a 1st Embodiment of the laser irradiation device according to the present invention.
[FIG. 2] FIG. 2 (a) is a side view showing the state in which the laser head of the laser irradiation device according to the 1st Embodiment is irradiating with laser light, and FIG. 2 (b) is a schematic cross-sectional view of the laser head shown in FIG. 2 (a).
[FIG. 3] FIG. 3 (a) is an explanatory drawing showing the shape of small-diameter laser light irradiated from the laser head of the laser irradiation device according to the 1st Embodiment when it reaches a plated metal sheet, and FIG. 3 (b) is an explanatory drawing showing the shape of large-diameter laser light irradiated from the laser head of the laser irradiation device according to the 1st Embodiment when it reaches a plated metal sheet.
[FIG. 4] FIG. 4 (a) is an explanatory drawing showing the output density distribution of laser light on a plated metal sheet when the plated metal sheet is irradiated with laser light using the laser irradiation device according to the 1st Embodiment, in cross-section, and FIG. 4 (b) is an explanatory drawing showing the output density distribution of FIG. 4 (a) from above.
[FIG. 5] FIG. 5 (a) is an explanatory drawing showing the shape of small-diameter laser light irradiated from the laser head of the laser irradiation device according to the 2nd Embodiment when it reaches a plated metal sheet, and
FIG. 5 (b) is an explanatory drawing showing the shape of a large-diameter laser light irradiated from the laser head of the laser irradiation device according to the 2nd Embodiment when it reaches a plated metal sheet.
[FIG. 6] FIG. 6 is a perspective view showing one embodiment of the laser processing apparatus according to the present invention.
[FIG. 7] FIG. 7 (a) to 7 (d) is an explanatory drawing showing the shapes of a large-diameter laser light irradiated from the laser head of a laser irradiation device according to another embodiment when it reaches a plated metal sheet.

### [Description of Embodiments]

Hereinafter, preferred embodiments of the present invention are described in detail with reference to the drawings as necessary. Note that, in the drawings, the same elements are given the same reference signs and duplicated explanations are omitted. Also, unless otherwise specified, positional relationships such as top, bottom, left and right are based on the positional relationships shown in the drawings. In addition, the dimensional ratios in the drawings are not limited to those shown in the drawings.

### (Laser irradiation device)

The laser irradiation device according to the present invention is for irradiating with laser light, and more specifically, it is a device for cutting a plated metal sheet, on which a plating film is formed on its surface, with laser light. That is, in the laser irradiation device, by moving the laser head, the plated metal sheet can be cut with the laser light irradiated from the laser head.

Here, the shape of the plated metal sheet may be flat or three-dimensional before and after laser processing.

Also, before laser processing, the plated metal sheet may be cut to a predetermined size (so-called blank material) or it may be a long piece wound in a coil. For example, a laser processing apparatus may use a blank material and cut it into a desired shape to create a processed material, or it may use a coil-shaped material and cut it to create a blank material.

For the plated metal sheet, the material is not particularly limited as long as it can be cut by laser light, and examples include iron sheet, aluminum sheet, titanium sheet and steel sheet (including high tensile strength steel and ultra-high tensile strength steel), and alloys of these.

Among these, a steel sheet is preferably used as the material for a metal sheet because it offers excellent versatility and strength, as well as from the perspective of being able to fully receive the advantageous effects of the present invention.

If the metal sheet is a steel sheet, the thickness of the plated metal is preferably 9.0 mm or less, and more preferably 0.4 to 9.0 mm.

Note that, since the plating film is an extremely thin film, the thickness of the metal sheet itself may be within the above range.

When the thickness of a plated metal sheet exceeds 9.0 mm, laser processing takes longer compared to when the thickness is within the above range, and although this reduces the amount of scattering of spatter, it has the disadvantage of lower productivity.

For a plated metal sheet, the materials used for the plating film include nickel, chromium, zinc, copper, gold, silver, tin, and aluminum.

Among these, if the metal sheet is a steel sheet, it is preferable to use zinc or aluminum as the material for the plating film, as these have a higher ionization tendency than iron and offer superior rust prevention.

That is, the plating film is preferably a zinc plating film or an aluminum plating film.

### (1st Embodiment of a laser irradiation device)

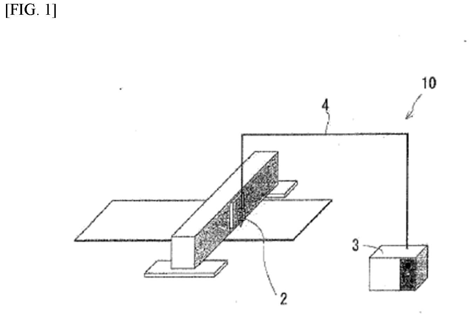

FIG. 1 is a schematic perspective view showing the 1st Embodiment of the laser irradiation device according to the present invention.

As shown in FIG. 1, the laser irradiation device 10 according to the 1st Embodiment comprises a laser head 2 and a laser oscillator 3 connected to the said laser head 2 via an optical fiber cable 4.

In the laser irradiation device 10, the laser oscillator 3 is a device for introducing laser light into the laser head 2, and any publicly known product may be appropriately adopted.

Note that, such laser oscillator 3 is installed at any location outside the laser head 2.

Similarly, for the optical fiber cable 4, any publicly known product may be appropriately adopted.

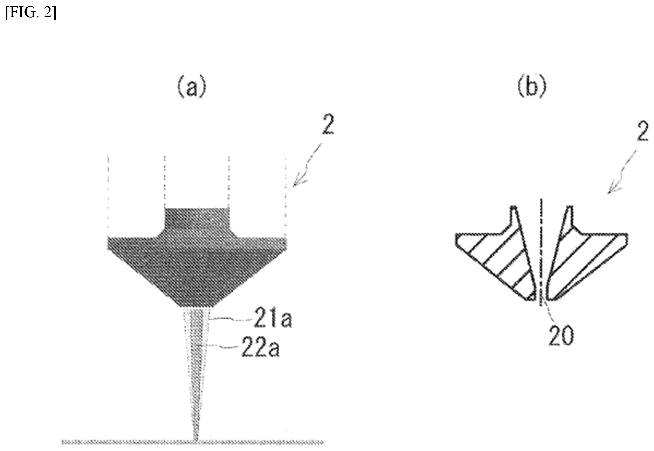

FIG. 2 (a) is a side view showing the state in which the laser head of the laser irradiation device according to the 1st Embodiment is irradiating with laser light, and FIG. 2 (b) is a schematic cross-sectional view of the laser head shown in FIG. 2 (a).

As shown in FIG. 2 (b), the laser head 2 is provided with a nozzle opening 20 at its lower end. Therefore, in the laser irradiation device 10, the laser light is irradiated downward from the nozzle opening 20 of the laser head 2.

Also, the laser head 2 has a built-in lens (not shown in the drawing) for collecting the laser light introduced from the laser oscillator 3.

As shown in FIG. 2 (a), the laser irradiation device 10 is capable of irradiating with both small-diameter laser light 22a and large-diameter laser light 21a.

Note that, in the laser irradiation device 10, by adjusting the laser light introduced from the laser oscillator 3, it is possible to irradiate the large-diameter laser light 21a and the small-diameter laser light 22a from the laser head 2 simultaneously or separately.

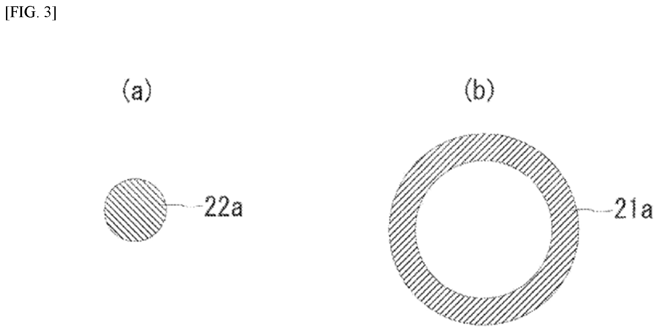

FIG. 3 (a) is an explanatory drawing showing the shape of small-diameter laser light irradiated from the laser head of the laser irradiation device according to the 1st Embodiment when it reaches a plated metal sheet, and FIG. 3 (b) is an explanatory drawing showing the shape of large-diameter laser light irradiated from the laser head of the laser irradiation device according to the 1st Embodiment when it reaches a plated metal sheet.

Note that, FIG. 3 (a) and (b) show the shapes of the laser light when it reaches a plated metal sheet, but the shapes of the laser light before reaching the plated metal sheet is not limited to these.

As shown in FIG. 3 (a), the small-diameter laser light 22a is round in shape, and the entire circle is the laser light. Furthermore, such round shapes include not only perfect circles but also ellipses.

As shown in FIG. 3 (b), the large-diameter laser light 21a is in a shape of continuous ring shaped (donut-shaped), and the gap between the outer and inner rings is laser light.

In addition, the large-diameter laser light 21a has a larger diameter than the small-diameter laser light, forming a ring that surrounds the small-diameter laser light 22a. That is, the small-diameter laser light 22a is irradiated inside the inner circle of the large-diameter laser light 21a.

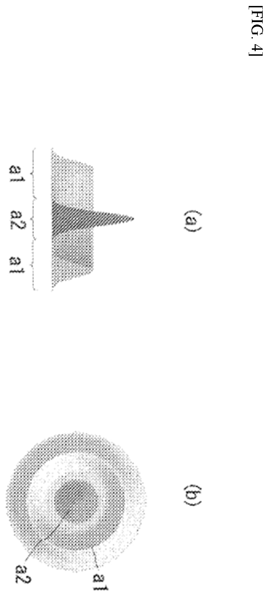

FIG. 4 (a) is an explanatory drawing showing the output density distribution of laser light on a plated metal sheet when the plated metal sheet is irradiated with laser light using the laser irradiation device according to the 1st Embodiment, in cross-section, and FIG. 4 (b) is an explanatory drawing showing the output density distribution of FIG. 4 (a) from above.

As shown in (a) and (b) in FIG. 4, in the laser irradiation device 10, the large-diameter laser light 21a is irradiated onto a relatively wide area a1 outside the small-diameter laser light 22a. This breaks the plating film on the plated metal sheet.

On the other hand, the small-diameter laser light 22a is irradiated onto a relatively narrow area a2 inside the inner circle of the large-diameter laser light 21a. This cuts the metal sheet.

In the laser irradiation device 10 according to the 1st Embodiment, the laser head 2 irradiates a plated metal sheet with laser light from the nozzle opening 20 of the laser head 2 while it is being moved Therefore, in the case of a plated metal sheet, the plating film is broken by the irradiation with only the large-diameter laser light 21a, and immediately after that, the metal sheet is cut by the irradiation with only the small-diameter laser light 22b.

In this way, the laser irradiation device 10 is capable of efficiently cutting a plated metal sheet while inhibiting scattering of spatter by breaking the plating film, which is considered to be the cause of scattering of spatter, just before cutting.

Also, because the plated metal sheet is cut immediately after energy is applied and the plating film is broken, rather than being left in that state, the beginning of oxidation of the area where the plating film of the plated metal sheet is broken can be inhibited as much as possible.

At this time, the output of the small-diameter laser light 22a is not particularly limited as long as it can cut the metal sheet, however, from the viewpoint of safety and energy cost, it is preferably to be 0.5 to 15.0 kW.

Also, the output of the large-diameter laser light 21a is not particularly limited as long as it can break the plating film, however, from the viewpoint of safety and energy cost, it is preferably to be 0.1 to 10.0 kW.

Furthermore, it is preferable that the output of the small-diameter laser light 22a per unit area is greater than the output of the large-diameter laser light 21a per unit area.

Note that, for example, as a plated metal sheet, when adopting a steel sheet, which has a zinc plating film or an aluminum plating film formed on its surface, and whose thickness is 9 mm or less, it is possible to effectively inhibit the scattering of spatter while cutting by controlling the output of the small-diameter laser light and the output of the large-diameter laser light within the above range.

Here, the types of small-diameter laser light 22a and large-diameter laser light 21a are not particularly limited; for example, solid-state lasers, liquid lasers, gas lasers, semiconductor lasers, free-electron lasers, metal vapor lasers, chemical lasers can be used.

### (2nd Embodiment of a laser irradiation device)

The laser irradiation device according to the 2nd Embodiment, similar to the laser irradiation device 10 according to the 1st Embodiment, comprises a laser head 2 and a laser oscillator 3 connected to the said laser head 2 via an optical fiber cable 4.

That is, the laser irradiation device according to the 2nd Embodiment is the same as the laser irradiation device 10 according to the 1st Embodiment, except that the laser light is different, as described later.

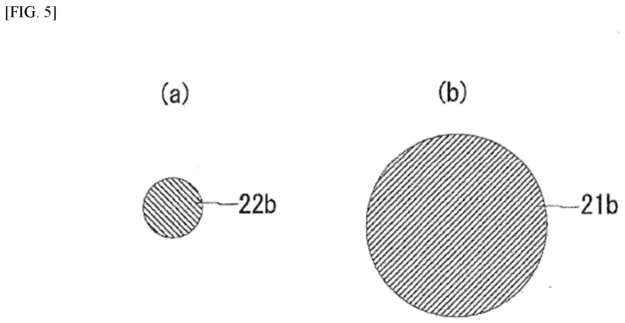

FIG. 5 (a) is an explanatory drawing showing the shape of small-diameter laser light irradiated from the laser head of the laser irradiation device according to the 2nd Embodiment when it reaches a plated metal sheet, and FIG. 5 (b) is an explanatory drawing showing the shape of a large-diameter laser light irradiated from the laser head of the laser irradiation device according to the 2nd Embodiment when it reaches a plated metal sheet.

Note that, FIG. 5 (a) and FIG. 5 (b) show the shapes of the laser light when it reaches a plated metal sheet, but the shapes of the laser light before reaching the plated metal sheet is not limited to these.

As shown in FIG. 5 (a), the small-diameter laser light 22b is round in shape, and the entire circle is the laser light. Furthermore, such round shapes include not only perfect circles but also ellipses.

As shown in FIG. 5(b), the large-diameter laser light 21b is round in shape, and the entire circle is the laser light.

Furthermore, such round shapes include not only perfect circles but also ellipses.

In addition, the large-diameter laser light 21b has a larger diameter than the small-diameter laser light, and round in shape containing the small-diameter laser light 22b.

That is, the small-diameter laser light 22b is irradiated onto the central portion of the large-diameter laser light 21b so as to overlap with the large-diameter laser light 21b.

In the laser irradiation device according to the 2nd Embodiment, the laser head 2 irradiates a plated metal sheet with laser light from the nozzle opening 20 of the laser head 2 while it is being moved.

Therefore, in the plated metal sheet, the plating film is broken by the irradiation with only the large-diameter laser light 21b, and immediately after that, the simultaneous irradiation with large-diameter laser light 21b and small-diameter laser light 22b cuts the metal sheet.

In this way, the laser irradiation device can efficiently cut a plated metal sheet while inhibiting scattering of spatter by breaking the plating film, which is considered to be the cause of scattering of spatter, just before cutting.

Also, because the plated metal sheet is cut immediately after energy is applied and the plating film is broken, rather than being left in that state, the beginning of oxidation of the area where the plating film of the plated metal sheet is broken can be inhibited as much as possible.

Here, the output range of the small-diameter laser light 22b and the output range of the large-diameter laser light 21b are the same as mentioned above, so the explanation is omitted.

Note that, it is preferable that the output of the small-diameter laser light 22b per unit area is greater than the output of the large-diameter laser light 21b per unit area.

Also, the types of small-diameter laser light 22b and large-diameter laser light 21b are the same as mentioned above, so the explanation is omitted.

### (Laser processing apparatus)

The laser processing apparatus according to the present invention is an apparatus for performing laser processing, and more specifically, it is an apparatus that moves the laser head 2 of the above laser irradiation device 10 mentioned above while transporting a plated metal sheet, and cuts the relevant plated metal sheet with laser light irradiated from the nozzle opening 20 of the laser head 2.

In the laser processing apparatus, continuous laser processing is performed while transporting a plated metal sheet continuously, resulting in excellent productivity.

Note that, in this DESCRIPTION, "transport direction" means the transport direction of a plated metal sheet.

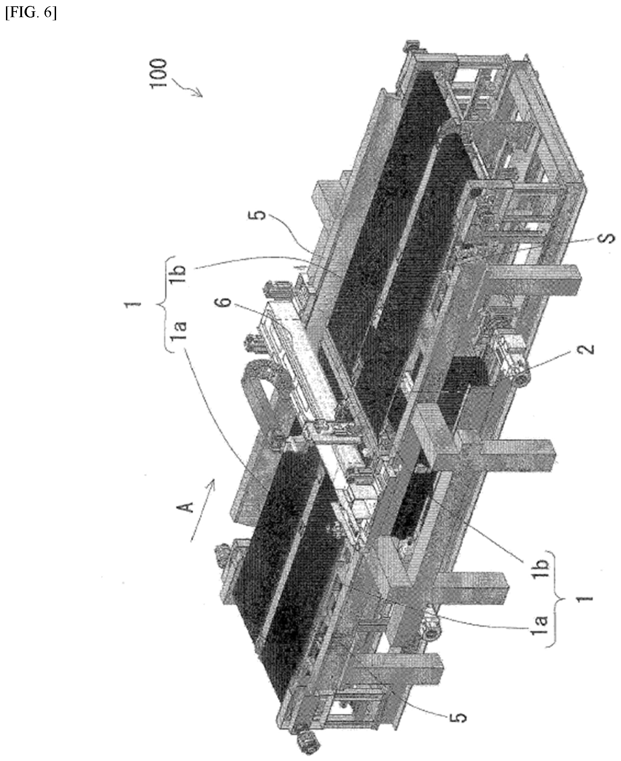

FIG. 6 is a perspective view showing one embodiment of the laser processing apparatus according to the present invention.

Note that, in FIG. 6, the description of the plated metal sheet and the laser oscillator 3 is omitted.

As shown in FIG. 6, the laser processing apparatus 100 according to this embodiment is equipped with a laser irradiation device 10 for irradiating a plated metal sheet with laser light, conveyors 1 for transporting a plated metal sheet (not shown in the drawing), and Y-axis rails 5 and an X-axis rail 6 for moving the laser head 2.

In the laser processing apparatus 100, the conveyors 1 are arranged side by side on the left and right, and the left conveyor 1 and the right conveyor 1 have the same structure.

Also, the conveyors 1 have the function of transporting a plated metal sheet before and after laser processing in a predetermined transport direction A, and when transporting a plated metal sheet, the left and right conveyors 1 are driven in synchronization. Note that, if a plated metal sheet is small, it is possible to drive only one of the conveyors 1.

Conveyors 1 consist of an upstream side conveyor 1a and a downstream side conveyor 1b arranged in series.

Both the upstream side conveyor 1a and the downstream side conveyor 1b have a belt and guide rolls that guide the said belt.

And the upstream side conveyor 1a and the downstream side conveyor 1b can be driven independently of each other.

In conveyors 1, a gap S is provided between the upstream side conveyor 1a and the downstream side conveyor 1b.

Therefore, the distance of the gap S in the transport direction A of plated metal sheets is equivalent to the distance between the upstream side conveyor 1a and the downstream side conveyor 1b in the transport direction A.

Note that, in the width direction, the entire width between the upstream side conveyor 1a and the downstream side conveyor 1b is a gap S.

Regarding gap S, by moving the downstream side guide rolls of the upstream side conveyor 1a to upstream side or downstream side, and/or by moving the upstream side guide rolls of the downstream side conveyor 1b to the upstream side or downstream side, the distance in the transport direction A of the plated metal sheet of gap S and the position of the gap S can be changed.

For example, in order to move gap S to upstream side without changing the distance in the transport direction A of the plated metal sheet, the downstream side guide rolls of the upstream side conveyor 1a are to be moved to upstream side, and the upstream side guide rolls of the downstream side conveyor 1b are to be moved to upstream side, and in order to move gap S to downstream side without changing the distance in the transport direction A of the plated metal sheet, the downstream side guide rolls of the upstream side conveyor 1a are to be moved to downstream side, and upstream side guide rolls of the downstream side conveyor 1b are to be moved to downstream side.

Note that, both the upstream side conveyor 1a and the downstream side conveyor 1b are equipped with tension adjustment rolls for adjusting the tension of the belts.

In the laser processing apparatus 100, the distance of the gap S in the transport direction A of the plated metal sheet can be changed according to the type and size of the plated metal sheet as well as the laser processing conditions, etc.

Also, in the laser processing apparatus 100, because the laser light is irradiated onto the plated metal sheet while moving the laser head 2, the gap S is positioned directly below the laser head 2, and the gap S is made to follow the movement of the laser head 2. This prevents the damage of belts by the laser light.

Note that, this following of the gap S is performed in response to the movement of the laser head 2 in the transport direction A of a plated metal sheet.

The laser head 2 is positioned above the gap S.

A pair of Y-axis rails 5 are provided on both sides of the conveyor 1 and extend in the transport direction A.

The reciprocating movement of the laser head 2 in the transport direction A of the plated metal sheet is guided by the Y-axis rails 5. That is, the range of motion of the laser head 2 in the transport direction A of the plated metal sheet depends on the length of the Y-axis rails 5.

Note that, as mentioned above, the gap S is made to follow the movement of the laser head 2 in the transport direction A.

On the other hand, the X-axis rail 6 extends across the entire width of the conveyor 1.

The reciprocating movement of the laser head 2 in the width direction is guided by the X-axis rail 6.

Note that the gap S does not follow the movement of the laser head 2 when it moves only in the transport direction A.

That is, the laser head 2 is guided by the X-axis rail 6 and is able to make reciprocating movement, and the X-axis rail 6 is guided by the Y-axis rails 5 and is able to make reciprocating movement.

Therefore, by providing the Y-axis rails 5 and the X-axis rail 6, the laser head 2 can be smoothly moved in any direction, such as in the front-to-rear direction, left-to-right direction, diagonal direction, and curved direction, on a plane parallel to the plated metal sheet.

Also, when the area to be cut (hereinafter referred to as planned cutting location) of a plated metal sheet has even a complex shape or a smooth curve, high-precision laser processing can be performed.

In the laser processing apparatus 100, a collection box (not shown in the drawing) is provided below the gap S. Note that, such collection box follows the movement of the gap S.

The collection box is provided along the entire width, according to the shape of the gap S.

In the laser processing apparatus 100, a plated metal sheet is cut by the laser light irradiated from the laser nozzle opening 20 of the laser head 2.

Then, the spatter generated during cutting falls and is collected in the collection box. Note that, as mentioned above, by using the laser head 2, the scattering of spatter is inhibited.

### (Laser processing method)

The laser processing method according to this embodiment uses the laser processing apparatus 100 mentioned above.

Specifically, as the first step, the planned cutting location is marked on the plated metal sheet.

Next, as the second step, the transport speed of the plated metal sheet is set, and accordingly the movement trajectory of the laser head 2 is set to cut the plated metal sheet at the planned cutting location.

Next, as the third step, the movement of the laser head 2 relative to the X-axis rail 6 and the movement of the X-axis rail 6 relative to the Y-axis rails 5 are set so that the laser head 2 moves along the movement trajectory.

And these steps are performed under computer control.

At this time, with this laser processing method, while simultaneous outputting small-diameter laser light 22a and 22b and large-diameter laser light 21a and 21b, the laser head 2 is made to travel along the planned cutting location of the plated metal sheet.

As a result, at any point on the planned cutting location, the large-diameter laser light 21a and 21b are irradiated first, followed by the small-diameter laser light 22a and 22b.

Therefore, in the plated metal sheet, regardless of the direction of movement of the laser head 2, the plating film is always broken first, and the metal sheet is cut at the position where the plating film is broken, thus efficiently inhibiting the scattering of spatter.

Also, in the laser processing method, since it is simply necessary to output small-diameter laser light 22a and 22b and large-diameter laser light 21a and 21b simultaneously and make the laser head 2 travel, complex control of the laser light irradiation is not required, and laser processing can be performed relatively easily.

In the laser processing method, it is preferable that the relative speed of the laser head 2 with respect to a plated metal sheet is 1.0 to 150 m/min.

In this case, the scattering of spatter can be inhibited, and at the same time, productivity can be improved.

As above, the preferred embodiments of the present invention are described, however, the present invention is not limited to the embodiments mentioned above.

In the laser irradiation device 10 according to the 1st Embodiment, the large-diameter laser light 21a is continuous ring-shaped (donut-shaped) (see FIG. 3 (b)), and in the laser irradiation device 10 according to the 2nd Embodiment, the large-diameter laser light 21b is round (see FIG. 5 (b)), however, the shape is not limited to these, as long as the plating film can be broken outside the small-diameter laser light.

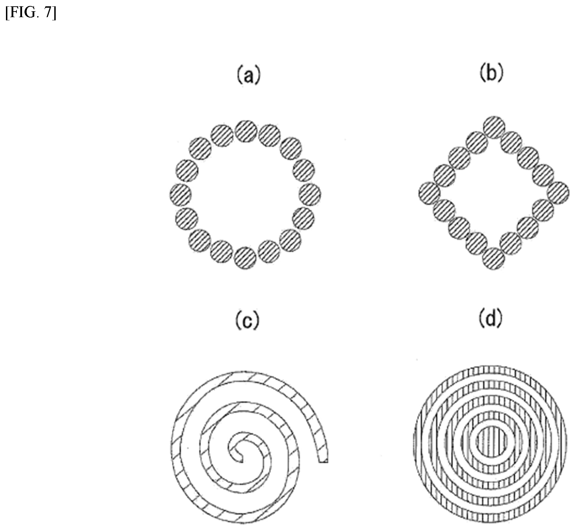

FIG. 7 (a) to (d) is an explanatory drawing showing the shapes of a large-diameter laser light irradiated from the laser head of a laser irradiation device according to another embodiment when it reaches a plated metal sheet.

The large-diameter laser light may be in a shape where circles are arranged in a ring such as shown in FIG. 7 (a); where circles are arranged to form a square as shows in FIG. 7 (b); where it is in a shape of spiral as shown in FIG. 7 (c); or where multiple rings are arranged concentrically as shown in FIG. 7 (d).

In the laser processing devices 100 according to the present embodiments, the conveyors 1 are arranged side by side, however, only one conveyor may be arranged, or three or more conveyors may be arranged side by side.

Also, while the conveyors 1 use tension adjustment rolls as a means of adjusting the belt tension, it is not limited to this, and any publicly known methods can be adopted as appropriate.

In the laser processing apparatus 100 according to this embodiment, a gap S is provided between the upstream side conveyor 1a and the downstream side conveyor 1b, however, it is also possible to use only one of the upstream side conveyor 1a or the downstream side conveyor 1b and guide the belt at the location where laser processing is performed by diverting it downwards away from the plated metal sheet in order to provide a certain amount of space.

In the laser processing apparatus 100 according to this embodiment, while transporting a plated metal sheet, the laser head 2 is moved and the relevant plated metal sheet is cut by the laser light irradiated from the nozzle opening 20 of the laser head 2, however, it is also possible to move the laser head 2 while the plated metal sheet is, for example, intermittently stopped, and cut the relevant plated metal sheet by the laser light irradiated from the nozzle opening 20 of the laser head 2.

In the laser processing apparatus 100 according to this embodiment, laser processing is performed on a plated metal sheet between conveyors 1, but the apparatus is not limited to this.

For example, apart from conveyors 1, a pin table is provided, and laser processing may be performed on this table.

That is, the plated metal sheet may be transported by conveyors 1, and laser processing may be performed on the plated metal sheet on the pin table (processing area).

In the laser processing apparatus 100 according to this embodiment, large-diameter laser light 21a and 21b and small-diameter laser light 22a and 22b are irradiated from one nozzle opening 20 of the laser head 2, however, the apparatus may also be equipped with separate nozzle openings for irradiating the large-diameter laser light 21a and 21b and for irradiating the small-diameter laser light 22a and 22b.

Also, the apparatus may also be equipped with separate laser heads for irradiating large-diameter laser light 21a and 21b and for irradiating the small-diameter laser light 22a and 22b.

In the laser processing apparatus according to this embodiment, an X-axis rail 6 and Y-axis rails 5 are used as means for moving the laser head 2, but the means for moving is not limited to this.

### [Industrial Applicability]

The present invention can be used as a laser irradiation device 10 for cutting a plated metal sheet with laser light (laser processing), a laser processing apparatus 100 including the same, and a laser processing method.

For example, it can be used as a laser irradiation device 10 for cutting a blank material into a desired shape to create a processed material, or for cutting a coiled material to create a blank material, a laser processing apparatus 100 including the same, and a laser processing method.

Using the laser irradiation device 10, the laser processing apparatus 100 including the same, and the laser processing method of the present invention, it is possible to inhibit scattering of spatter while cutting even a plated metal sheet.

### [Reference Signs List]

- 1: Conveyor
- 10: Laser irradiation device
- 100: Laser processing apparatus
- 1a: Upstream side conveyor
- 1b: Downstream side conveyor
- 2: Laser head
- 20: Nozzle opening
- 21a, 21b: Large-diameter laser light
- 22a, 22b: Small-diameter laser light
- 3: Laser oscillator
- 4: Optical fiber cable
- 5: Y-axis rail
- 6: X-axis rail
- S: Gap

## Claims

1. A laser irradiation device(10) for cutting a plated metal sheet, on which a plating film is formed on its surface, with laser light;
which comprises a laser head(2) having a built-in lens for collecting the laser light, and a laser oscillator(3) for introducing the laser light into the said laser head(2);
and irradiates the above-mentioned plated metal sheet with round small-diameter laser light(22a,22b) and large-diameter laser light(21a,21b) having diameters larger than those of the said small-diameter laser light(22a,22b) as the above-mentioned laser light;
and the above-mentioned irradiation with the large-diameter laser light(21a,21b) breaks the above-mentioned plating film, and the above-mentioned irradiation with the small-diameter laser light(22a,22b) cuts the above-mentioned metal sheet.

2. The laser irradiation device(10) according to claim 1, wherein the above-mentioned large-diameter laser light(21a,21b) is ring-shaped and surrounding the small-diameter laser light(22a,22b), and
the above-mentioned irradiation with only the large-diameter laser light(21a,21b) breaks the above-mentioned plating film, and the above-mentioned irradiation with only the small-diameter laser light(22a,22b) cuts the above-mentioned metal sheet.

3. The laser irradiation device(10) according to claim 1, wherein the above-mentioned large-diameter laser light(22a,22b) is round in shape containing the small-diameter laser light(22a,22b), and
the above-mentioned irradiation with only the large-diameter laser light(21a,21b) breaks the above-mentioned plating film, and the simultaneous irradiation of the above-mentioned small-diameter laser light(22a,22b) and the above-mentioned large-diameter laser light(21a,21b) cuts the above-mentioned metal sheet.

4. The laser irradiation device(10) according to claim 1, wherein the above-mentioned plating film is a zinc plating film or an aluminum plating film, and
the above-mentioned metal sheet is a steel sheet, and
the thickness of the above-mentioned plated metal sheet is 9.0 mm or less, and
the output of the above-mentioned small-diameter laser light(22a,22b) is 0.5 to 15.0 kW,
and the output of the above-mentioned large-diameter laser light(21a.21b) is 0.1 to 10.0 kW.

5. A laser processing apparatus(100) for cutting a plated metal sheet, on which a plating film is formed on its surface, with laser light,
which is equipped with the above-mentioned laser irradiation device(10) according to claim 1 for irradiating the laser light, and
conveyors(1) for transporting the above-mentioned plated metal sheet,
and
cuts the above-mentioned plated metal sheet with the above-mentioned laser light while continuously transporting the above-mentioned plated metal sheet.

6. The laser processing apparatus(100) according to claim 5, which is further equipped with a pair of Y-axis rails(5) on both sides of the above-mentioned conveyors(1) and extend in the transport direction,
and the X-axis rail(6) extends across the entire width of the above-mentioned conveyor(1),
and
the above-mentioned laser head(2) is guided by the above-mentioned X-axis rail(6) and is capable of reciprocating movement,
and the above-mentioned X-axis rail(6) is guided by the above-mentioned Y-axis rails(5) and is capable of reciprocating movement.

7. A laser processing method using the laser processing apparatus(100) according to claim 6,
wherein, while simultaneously outputting the above-mentioned small-diameter laser light(22a,22b) and the above-mentioned large-diameter laser light(22a,22b) makes the above-mentioned laser head(2) travel along the planned cutting location of the above-mentioned plated metal sheet.

8. The laser processing method according to claim 7, wherein the relative speed of the above-mentioned laser head(5) with respect to the above-mentioned plated metal sheet is 1.0 to 150 m/min.
